# EUROPEAN PATENT SPECIFICATION

(11) **EP 4 432 411 B1**
(45) Date of publication and mention of the grant of the patent: **18.11.2026**
(21) Application number: 23796821.9
(22) Date of filing: 27.04.2023
(51) Int. Cl.: H01M 10/04, H01M 10/0585, B29C 53/38

(54) **SIDE SEALING DEVICE FOR STACKED ELECTRODE BODY, SECONDARY BATTERY HAVING STACKED ELECTRODE BODY, AND METHOD FOR MANUFACTURING SAME**
SEITENDICHTUNGSVORRICHTUNG FÜR EINEN GESTAPELTEN ELEKTRODENKÖRPER, SEKUNDÄRBATTERIE MIT GESTAPELTEM ELEKTRODENKÖRPER UND VERFAHREN ZUR HERSTELLUNG DAVON
DISPOSITIF D'ÉTANCHÉITÉ LATÉRAL POUR CORPS D'ÉLECTRODE EMPILÉ, BATTERIE SECONDAIRE AYANT UN CORPS D'ÉLECTRODE EMPILÉ, ET SON PROCÉDÉ DE FABRICATION

(30) Priority: 27.04.2022 KR 20220051767
(43) Date of publication of application: 18.09.2024
(73) Proprietor: LG Energy Solution, Ltd., Seoul 07335 (KR)
(72) Inventor: LEE, Woo Won, Daejeon 34122 (KR)
(74) Representative: Goddar, Heinz J.
(86) International application number: PCT/KR2023/005749
(87) International publication number: WO 2023/211179

(56) References cited:
- JP-A- 2012 209 054
- JP-A- 2012 209 054
- JP-A- 2014 086 266
- JP-A- 2014 086 266
- JP-A- 2019 071 178
- JP-B2- 6 183 540
- JP-B2- 6 399 092
- KR-A- 20200 125 024

## Description

### Technical Field

The present invention relates to a side sealing device for a stacked electrode body, a secondary battery comprising the stacked electrode body, and a manufacturing method thereof, and specifically, relates to a side sealing device forming a solid sealing surface toward a non-electrode side of a stacked electrode body, and a manufacturing method thereof.

This application claims the benefit of priority based on Korean Patent Application No. 10-2022-0051767 dated April 27, 2022.

### Background Art (waiting)

In general, types of secondary batteries include nickel cadmium batteries, nickel hydrogen batteries, lithium-ion batteries, and lithium-ion polymer batteries, and the like.

Such secondary batteries attract attention not only as power sources for small products such as digital cameras, P-DVDs, MP3Ps, mobile phones, PDAs, portable game devices, power tools, and E-bikes, but also as power sources for electric vehicles (EVs), hybrid electric vehicles (REVs), parallel hybrid electric vehicles (PHEVs), and the like.

Medium-to-large battery modules electrically connecting several battery cells are used due to the need for high output and large capacity in medium-to-large devices such as automobiles. However, since it is preferable that the medium-to-large battery modules are manufactured as small and light as possible, rectangular batteries, pouch-type batteries, and the like that can be charged with a high integration degree and are lightweight compared to their capacity are mainly used as battery cells of the medium-to-large battery module.

In order to manufacture such a secondary battery, first, a stacked electrode body with a predetermined shape is formed by applying an electrode active material slurry to a positive electrode current collector and a negative electrode current collector to prepare a positive electrode (cathode) and a negative electrode (anode), and laminating them on both sides of a separator. Then, the stacked electrode body is accommodated in a battery case, and an electrolyte is injected and then sealed.

The stacked/folding electrode assemblies disclosed in the present applicant's Korean Laid-Open Patent Publication Nos. 2001-0082059, and 2001-0082060 have a full cell, which has a structure in which positive electrode/separator/negative electrode are sequentially laminated, as a unit cell, and are manufactured by repeatedly winding a long separator sheet by a unit length in a state where a plurality of full cells is disposed on the separator sheet.

In the case of such a stacked/folding electrode assembly, the outer shell of all full cells is surrounded by the separator sheet, so that the relative positions between the respective layers constituting the structure of the electrode assembly are fixed.

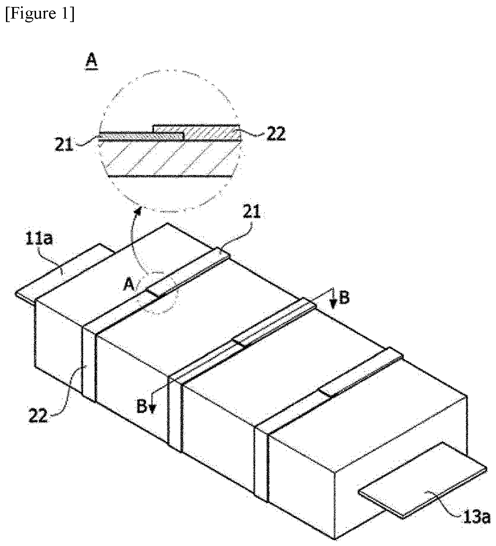

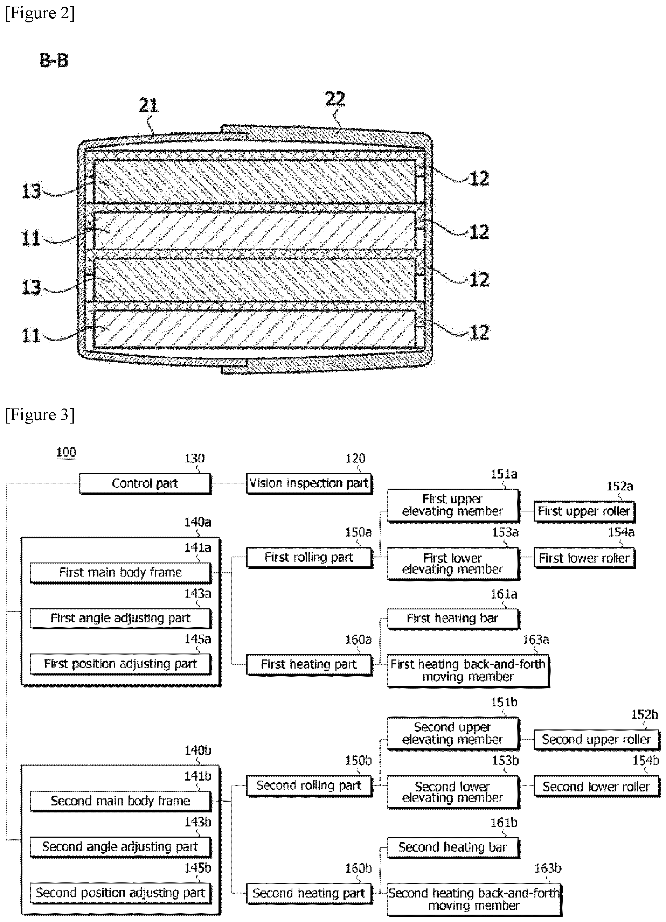

Figures 1 and 2 are diagrams for explaining a taping structure of a stacked electrode assembly according to the prior art.

Unlike the stacked/folding electrode assembly, the relative position between the electrode and the separator is not fixed, so that the side of the electrode assembly is taped using a tape to fix the relative positions between the respective layers. As shown in Figures 1 and 2, conventionally, the tapes (21, 22) surround the stacked electrode body in a band shape.

Referring to Figure 2, in the stacked electrode assembly, a positive electrode (11), a separator (12), and a negative electrode (13) are sequentially laminated. The separator (12) is disposed between the positive electrode (11) and the negative electrode (13), and prevents an electrical short circuit due to physical contact between the positive electrode (11) and the negative electrode (13).

In the case of such a stacked electrode assembly, in general, the separator (12) is manufactured to have wider horizontal and vertical widths than the electrodes (11, 13), and the stacked electrode assembly is manufactured by repeatedly performing a step of laminating the separator on a magazine or jig having a width corresponding to the horizontal or vertical width of the separator, and laminating an electrode thereon. Thereafter, the stacked electrode assembly is integrally introduced into subsequent processes to manufacture a secondary battery.

Since the stacked electrode assembly is integrally introduced into subsequent processes as one assembly, it is preferable to prevent the lamination from being distorted during the subsequent processes. To this end, conventionally, the lamination of the stacked electrode assembly was fixed through tapes so as not to be distorted.

Specifically, the tapes (21, 22) are taped while surrounding the outer surface of the stacked electrode body, and at this instance, as the ends of the tapes overlap, a step is generated by the overlapping thickness of the tapes. Due to the step caused by the taping, defects due to lithium precipitation may occur in the step portion (see A of Figure 1).

Also, in the taping process after the stack process, separators positioned at the upper and lower ends of the stacked electrode assembly may be peeled off or torn to expose the electrodes, resulting in defects.

Then, when the electrolyte is injected into the battery case in the packaging process, the long sides (non-electrode sides) are not sealed, so that a phenomenon in which the terminal separator is peeled off may occur, which may cause a problem of electrode exposure. In addition, when the secondary battery is transported after packaging is completed, waves are generated according to shaking of the electrolyte, and the generated waves affect the peeled separator, whereby there may also be a phenomenon that the separator is torn.

Furthermore, the conventional stacked electrode body does not block the inflow of foreign substances to the side, so that when foreign substances are introduced into the stacked electrode body during use, there has been a problem that a low voltage defect due to foreign substances occurs.

### Disclosure

### Technical Problem

The present invention is intended to provide a side sealing device for a stacked electrode body capable of preventing a separator tearing phenomenon that may occur on the long side (non-electrode side) of the stacked electrode body.

Through one example of the present invention, it is intended to provide a side sealing device for a stacked electrode body, which pre-forms the long side of the stacked electrode body so that the sealing surface is formed toward the long side of the stacked electrode body, and then pressurizes and heats it so that the sealing surface composed of separators is firmly maintained.

Through one example of the present invention, it is intended to provide a stacked electrode body in which a sealing surface formed by closely contacting separators with each other continuously is formed toward the long side to prevent separator damage, and a secondary battery comprising the same.

Through one example of the present invention, it is intended to provide a side sealing device capable of imparting rigidity to the separator extension portions toward the long side effectively and easily through up-down press and lateral-directional pressurization of the separator extension portions toward the long side, and a method thereof.

Through one example of the present invention, it is intended to provide a stacked electrode body capable of effectively and easily protecting separators toward the long side through up-down pressurization and lateral-directional thermal pressurization of the separators while using conventional separators as they are, and a secondary battery comprising the same.

### Technical Solution

In order to achieve the above-described objects, according to one example of the present invention, it is possible to provide a side sealing device according to claim 1.

It is preferable that the press part is provided to pressurize the separator extension portions extending further in the width direction of the stacked electrode body than the positive electrodes or the negative electrodes. As the separator, a conventional separator may be used as it is. That is, an additional structure or shape change, or material change, and addition of a coating layer or an adhesive layer, and the like, for forming sealing surfaces may be unnecessary.

The press part may comprise a rolling part performing rotational pressurization.

It is preferable that the rolling part performs pressurization such that the separators have a bending degree increasing, based on the height direction of the stacked electrode body, from the center toward the upper and lower ends. That is, it is preferable that the ends of the separators are formed to converge to the center based on the height direction of the stacked electrode body.

It is preferable that the reinforcing part comprises a heating part which heats the ends of the separators to impart a fixing force thereto.

It is preferable that the heating part pressurizes the ends of the separators toward the center of the stacked electrode body based on the width direction of the stacked electrode body to form the sealing surface through thermal fusion of the separators.

The sealing surface by thermal fusion may be formed on the entire extension portion of the up and down-laminated separators, and the cross section toward the non-electrode side of the stacked electrode body may be formed in a trapezoidal shape by the separators of the upper and lower ends, and the sealing surface.

The heating part may comprise a heating bar arranged in parallel with the longitudinal direction of the stacked electrode body; and a back-and-forth moving member which moves the heating bar back and forth in the width direction of the stacked electrode body.

The side sealing device comprises an inspection part generating alignment information of the stacked electrode body seated on the seating part.

It is preferable that it comprises a control part controlling operation of the press part and the reinforcing part, and controlling positions and angles of the press part and the reinforcing part to be corrected according to the alignment information generated by the inspection part.

It is preferable that it comprises a main body frame provided with the press part and the reinforcing part, and comprises a main body part adjusting positions and angles of the press part and the reinforcing part through movement and rotation of the main body frame.

It is preferable that the main body part is provided on both sides of the seating part, respectively.

The press part may be provided to extend downward and upward from the upper and lower ends of the main body frame, respectively, and the reinforcing part may be provided to extend laterally from the main body frame toward the stacked electrode body.

It may comprise a position adjusting part connected to the main body frame to integrally move the main body frame back and forth in the width direction of the stacked electrode body.

It may comprise an angle adjusting part connected to the main body frame to integrally rotate the main body frame in a horizontal direction.

It is preferable that the position adjusting part and the main body frame are connected to each other via the angle adjusting part.

The position adjusting part may comprise a Y-axis guide rail disposed above the main body frame in parallel in the width direction of the stacked electrode body; a Y-axis moving member movably provided on the Y-axis guide rail; and a driving motor providing a driving force to the Y-axis moving member.

It may comprise a gripper provided in the seating part to fix the electrode side of the seated stacked electrode body.

In order to achieve the above-described objects, according to one example of the present invention, it is possible to provide a secondary battery comprising a stacked electrode body formed by cross-laminating positive electrodes, separators, and negative electrodes, characterized in that sealing surfaces formed by closely contacting extension portions of the separators up and down with each other are provided in both sides of non-electrode sides of the stacked electrode body, the separator extension portion has a bending degree increasing, based on the height of the stacked electrode body, from the center toward both upper and lower ends, and a fixing force is imparted between the extension portions of the separators by thermal pressurization on the sealing surface.

The sealing surface by thermal pressurization is formed on the entire extension portion of the up and down-laminated separators, and the cross section toward the non-electrode side of the stacked electrode body is formed in a trapezoidal shape by the separators of the upper and lower ends, and the sealing surface.

A sealing device for a stacked electrode body according to a preferred example of the present invention is characterized by comprising a seating part in which a stacked electrode body cross-laminated with positive electrodes, separators, and negative electrodes is seated; a rolling part pre-forming the stacked electrode body so that sealing surfaces made of the separators, the ends of which come into contact with each other, are provided by pressurizing and rolling the long sides of the stacked electrode body up and down; and a heating part heating the sealing surfaces while being in surface contact with the sealing surfaces to seal the long sides of the stacked electrode body.

In a preferred example of the present invention, the rolling part comprises an upper roller disposed in parallel with the longitudinal direction of the stacked electrode body and pressurizing and rolling the upper surface of the stacked electrode body while operating downward in the height direction of the stacked electrode body; and a lower roller facing the upper roller, but disposed in parallel with the upper roller, and pressurizing and rolling the lower surface of the stacked electrode body while operating upward in the height direction of the stacked electrode body, which is characterized in that the upper roller and the lower roller pressurize and roll the stacked electrode body up and down while moving to the outer direction of the stacked electrode body in the width direction of the stacked electrode body to pre-form the long sides of the stacked electrode body so that sealing surfaces are provided as the ends of the separators come into contact with each other.

In a preferred example of the present invention, the heating part comprises a heating bar disposed in parallel with the longitudinal direction of the stacked electrode body, and being in surface contact with the sealing surface; and a heating bar back-and-forth moving member coupled to the heating bar to move the heating bar back and forth in the width direction of the stacked electrode body, which is characterized in that the heating bar is in surface contact with the sealing surface while moving forward toward the long side of the stacked electrode body by the heating bar back-and-forth moving member, thereby pressurizing and heating the sealing surface.

A sealing device for a stacked electrode body according to a preferred example of the present invention is characterized by comprising: a vision inspection part photographing the stacked electrode body from the top of the seating part to inspect the alignment of the long side of the stacked electrode body with respect to the alignment line of the seating part; and a main body frame in which the rolling part and the heating part are installed, but further comprising a main body part adjusting the position of the main body frame, based on long side alignment information of the vision inspection part, so that the rolling part and the heating part are disposed side by side toward the long side of the stacked electrode body.

In a preferred example of the present invention, it comprises an angle adjusting part coupled to the main body frame to rotate the main body frame from a reference position by an alignment angle (θ) based on long side alignment information; and a position adjusting part coupled to the angle adjusting part to be connected to the main body frame, and moving the main body frame back and forth in the width direction of the stacked electrode body to adjust the position of the rolling part relative to the stacked electrode body, which is characterized in that the reference position is a position where the main body frame is disposed in parallel with the alignment line of the seating part, and the alignment angle (θ) is an angle of the long side of the stacked electrode body with respect to the alignment line of the seating part.

In a preferred example of the present invention, it further comprises a control part receiving the long side alignment information from the vision inspection part to calculate the alignment angle (θ), an entry position and a heating position, and controlling operation of the angle adjusting part, the position adjusting part, the rolling part and the heating part for each predetermined step, which is characterized in that the entry position is a position set between the long side of the stacked electrode body and the center of the stacked electrode body, and the heating position is a position on the sealing surface.

In a preferred example of the present invention, it is characterized in that the control part controls operation of the main body part and the rolling part so that the main body frame rotates from the reference position by the alignment angle (θ) by the angle adjusting part, and moves forward from the reference position to the entry position in the width direction of the stacked electrode body by the position adjusting part, and the rolling part pressurizes the stacked electrode body up and down at the entry position, and while the main body frame moves backward from the entry position to the reference position by the position adjusting part, the rolling part pressurizes and rolls the long sides of the stacked electrode body up and down.

In a preferred example of the present invention, it is characterized in that the control part controls operation of the heating part so that after completing the operation of the rolling part, the heating bar of the heating part moves forward to the heating position in the width direction of the stacked electrode body, and comes into surface contact with the sealing surface at the heating position, thereby pressurizing and heating the sealing surface for the predetermined heating time.

In a preferred example of the present invention, it is characterized in that the main body frame has a structure in which a portion facing the long side of the stacked electrode body is opened, the rolling part is installed on the opened side of the main body frame to be able to move up and down in the height direction of the stacked electrode body, and the heating part is installed to be movable back and forth in the width direction of the stacked electrode body.

In a preferred example of the present invention, the position adjusting part comprises a Y-axis guide rail disposed on the top of the main body frame in parallel in the width direction of the stacked electrode body; a Y-axis moving member installed on the Y-axis guide rail to be movable back and forth in the width direction of the stacked electrode body and coupled to the angle adjusting part; and a driving motor coupled to the Y-axis moving member to provide a driving force to the Y-axis moving member, which is characterized by adjusting the position of the main body frame through controlling the rotational direction and rotational speed of the driving motor so that the main body frame enters into or retreats from the stacked electrode body.

In a preferred example of the present invention, the rolling part comprises an upper roller installed at the upper end of the main body frame in parallel in the longitudinal direction of the stacked electrode body, and pressurizing and rolling the upper surface of the stacked electrode body; an upper elevating member coupled to the upper roller at the upper end of the main body frame to elevate the upper roller in the height direction of the stacked electrode body; a lower roller installed on the lower end of the main body frame to face the upper roller in parallel therewith, and pressurizing and rolling the lower surface of the stacked electrode body; and a lower elevating member coupled to the lower roller at the lower end of the main body frame to elevate the lower roller in the height direction of the stacked electrode body, which is characterized in that when the main body frame reaches the entry position, the rolling part operates so as to pressurize the stacked electrode body up and down while the upper roller is lowered by the upper elevating member and the lower roller is elevated by the lower elevating member, and the entry position is a position set between the long side of the stacked electrode body and the center of the stacked electrode body.

In a preferred example of the present invention, when the main body frame is moved to the reference position, the rolling part operates so as to release the pressurization on the stacked electrode body while the upper roller is elevated by the upper elevating member and the lower roller is lowered by the lower elevating member.

In a preferred example of the present invention, the main body part comprises a first main body part installed with a first heating part sealing one side of the long sides of the pre-formed stacked electrode body; and a second main body part installed with a second heating part sealing the other side of the long sides of the pre-formed stacked electrode body, which is characterized in that the first main body part and the second main body part are disposed to face each other with the seating part interposed therebetween, thereby operating to simultaneously seal both of the long sides of the stacked electrode body.

In a preferred example of the present invention, the first main body part is characterized by comprising: a first main body frame installed with a first heating part and a first rolling part; a first angle adjusting part coupled to the first main body frame to adjust a rotation angle of the first main body frame to correspond to one side of the long sides of the stacked electrode body based on long side alignment information; and a first position adjusting part coupled to the first angle adjusting part to be connected to the first main body frame, thereby moving the first main body frame back and forth in the width direction of the stacked electrode body.

In a preferred example of the present invention, the first position adjusting part comprises: a first Y-axis guide rail disposed on the top of the first main body frame in parallel in the width direction of the stacked electrode body; a first Y-axis moving member installed on the first Y-axis guide rail to be movable back and forth in the width direction of the stacked electrode body and coupled to the first angle adjusting part; and a first driving motor coupled to the first Y-axis moving member to provide a driving force to the first Y-axis moving member, which is characterized in that through controlling the rotational direction and rotational speed of the first driving motor, it adjusts the position of the main body frame while the first Y-axis moving member moves forward from a first reference position to a first entry position and moves backward from the first entry position to the first reference position, the first reference position is a position where the first main body frame is disposed in parallel to the alignment line of the seating part, and the first entry position is a position between one side of the long sides of the stacked electrode body and the center of the stacked electrode body.

In a preferred example of the present invention, the first rolling part comprises a first upper roller and a first lower roller disposed to face each other, which is characterized in that the first upper roller and the first lower roller pressurizes and rolls the stacked electrode body up and down to pre-form one side of the long sides of the stacked electrode body so that a first sealing surface is formed on one side of the long sides of the stacked electrode body.

In a preferred example of the present invention, the first heating part comprises a first heating bar in surface contact with the first sealing surface; and a first heating bar back-and-forth moving member coupled to the first heating bar and the first main body frame to move the first heating bar back and forth with respect to the first main body frame in the width direction of the stacked electrode body, which is characterized in that the first heating bar is moved forward to a first heating position toward one side of the long sides of the stacked electrode body by the first heating bar back-and-forth moving member, and comes into surface contact with the first sealing surface on one side of the long sides of the stacked electrode body, thereby pressurizing and heating the first sealing surface to seal one side of the long sides of the stacked electrode body, and the first heating position is a position on one side of the long sides of the stacked electrode body.

In a preferred example of the present invention, the second main body part is characterized by comprising: a second main body frame installed with a second heating part and a second rolling part; a second angle adjusting part coupled to the second main body frame to adjust a rotation angle of the second main body frame to correspond to the other side of the long sides of the stacked electrode body based on long side alignment information; and a second position adjusting part coupled to the second angle adjusting part to be connected to the second main body frame, thereby moving the second main body frame back and forth in the width direction of the stacked electrode body.

In a preferred example of the present invention, the second position adjusting part comprises: a second Y-axis guide rail disposed on the top of the second main body frame in parallel in the width direction of the stacked electrode body; a second Y-axis moving member installed on the second Y-axis guide rail to be movable back and forth in the width direction of the stacked electrode body and coupled to the second angle adjusting part; and a second driving motor coupled to the second Y-axis moving member to provide a driving force to the second Y-axis moving member, which is characterized in that through controlling the rotational direction and rotational speed of the second driving motor, it adjusts the position of the main body frame while the second Y-axis moving member moves forward from a second reference position to a second entry position and moves backward from the second entry position to the second reference position, the second reference position is a position where the second main body frame is disposed in parallel to the alignment line of the seating part, and the second entry position is a position between the other side of the long sides of the stacked electrode body and the center of the stacked electrode body.

In a preferred example of the present invention, the second rolling part comprises a second upper roller and a second lower roller disposed to face each other, which is characterized in that the second upper roller and the second lower roller pressurizes and rolls the stacked electrode body up and down to pre-form the other side of the long sides of the stacked electrode body so that a second sealing surface is formed on the other side of the long sides of the stacked electrode body.

In a preferred example of the present invention, the second heating part comprises a second heating bar in surface contact with the second sealing surface; and a second heating bar back-and-forth moving member coupled to the second heating bar and the second main body frame to move the second heating bar back and forth with respect to the second main body frame in the width direction of the stacked electrode body, which is characterized in that the second heating bar is moved forward to a second heating position toward the other side of the long sides of the stacked electrode body by the second heating bar back-and-forth moving member, and comes into surface contact with the second sealing surface on the other side of the long sides of the stacked electrode body, thereby pressurizing and heating the second sealing surface to seal the other side of the long sides of the stacked electrode body, and the second heating position is a position on the other side of the long sides of the stacked electrode body.

The sealing device for a stacked electrode body according to a preferred example of the present invention is characterized by further comprising a gripper installed in the seating part to hold the short side of the stacked electrode body, thereby limiting the movement of the stacked electrode body.

The stacked electrode body according to a preferred example of the present invention is characterized in that it is manufactured using the above sealing device for the stacked electrode body.

A method for manufacturing a stacked electrode body according to a preferred example of the present invention is characterized by manufacturing a stacked electrode body using the sealing device for the stacked electrode body.

### Advantageous Effects

Through the present invention, it is possible to provide a side sealing device for a stacked electrode body capable of preventing a separator tearing phenomenon that may occur on the long side (non-electrode side) of the stacked electrode body.

Through one example of the present invention, it is possible to provide a side sealing device for a stacked electrode body, which pre-forms the long side of the stacked electrode body so that the sealing surface is formed toward the long side of the stacked electrode body, and then pressurizes and heats it so that the sealing surface composed of separators is firmly maintained.

Through one example of the present invention, it is possible to provide a stacked electrode body in which a sealing surface formed by closely contacting separators with each other continuously is formed toward the long side to prevent separator damage, and a secondary battery comprising the same.

Through one example of the present invention, it is possible to provide a side sealing device capable of imparting rigidity to the separator extension portions toward the long side effectively and easily through up-down press and lateral-directional pressurization of the separator extension portions toward the long side, and a method thereof.

Through one example of the present invention, it is possible to provide a stacked electrode body capable of effectively and easily protecting separators toward the long side through up-down pressurization and lateral-directional thermal pressurization of the separators while using conventional separators as they are, and a secondary battery comprising the same.

### Description of Drawings

Figures 1 and 2 are diagrams for explaining a taping structure of a stacked electrode assembly according to the conventional technology.
Figure 3 schematically illustrates a configuration diagram of a side sealing device for a stacked electrode body according to one example of the present invention.
Figures 4 and 5 schematically illustrate perspective diagrams of a side sealing device for a stacked electrode body according to one example of the present invention.
Figure 6 is a diagram for explaining a reference position, an entry position, and a heating position of a stacked electrode body according to one example of the present invention.
Figure 7 is a diagram for explaining position adjustment of a main body with respect to a stacked electrode body according to one example of the present invention.
Figure 8 is a diagram for explaining, in one example of the present invention, a process in which a first main body frame is moved to a first entry position and a second main body frame is moved to a second entry position.
Figures 9 to 11 are diagrams for explaining, in one example of the present invention, a process in which a first rolling part and a second rolling part pressurize and roll a stacked electrode body.
Figure 12(a) schematically illustrates a cross section of a stacked electrode body before pre-forming according to one example of the present invention, and Figure 12(b) schematically illustrates a cross section of a stacked electrode body pre-formed by a first rolling part and a second rolling part according to one example of the present invention.
Figure 13 schematically illustrates a perspective diagram of a pre-formed stacked electrode body according to one example of the present invention.
Figure 14 is a diagram for explaining a process of sealing both of long sides of a stacked electrode body by moving a first heating part and a second heating part to heating positions according to one example of the present invention.
Figure 15 schematically illustrates a perspective diagram of a stacked electrode body manufactured according to one example of the present invention.
Figure 16 schematically illustrates a cross-sectional diagram taken along line x-x of Figure 15.

### Best Mode

Hereinafter, a side sealing device for a stacked electrode body, a stacked electrode body, and a manufacturing method of the stacked electrode body, according to a preferred example of the present invention will be described with reference to the accompanying drawings. However, the accompanying drawings are exemplary, and the scope of the side sealing device for a stacked electrode body, the stacked electrode body, and the manufacturing method of the stacked electrode body of the present application is not limited by the accompanying drawings.

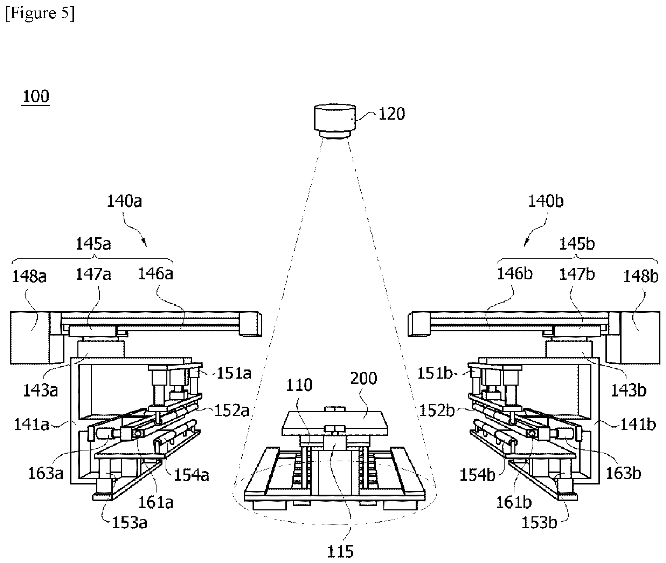

Referring to Figures 3 to 5, the side sealing device (100) for a stacked electrode body according to a preferred example of the present invention comprises a seating part (110) and a control part (130) controlling operation of the sealing device.

A stacked electrode body (200), in which positive electrodes (212), separators (211), and negative electrodes (213) are cross-laminated, is seated on the seating part (110). Sealing is performed toward the long side of the stacked electrode body (200) located on the seating part (110). Therefore, the seating part (110) may be referred to as a side sealing station.

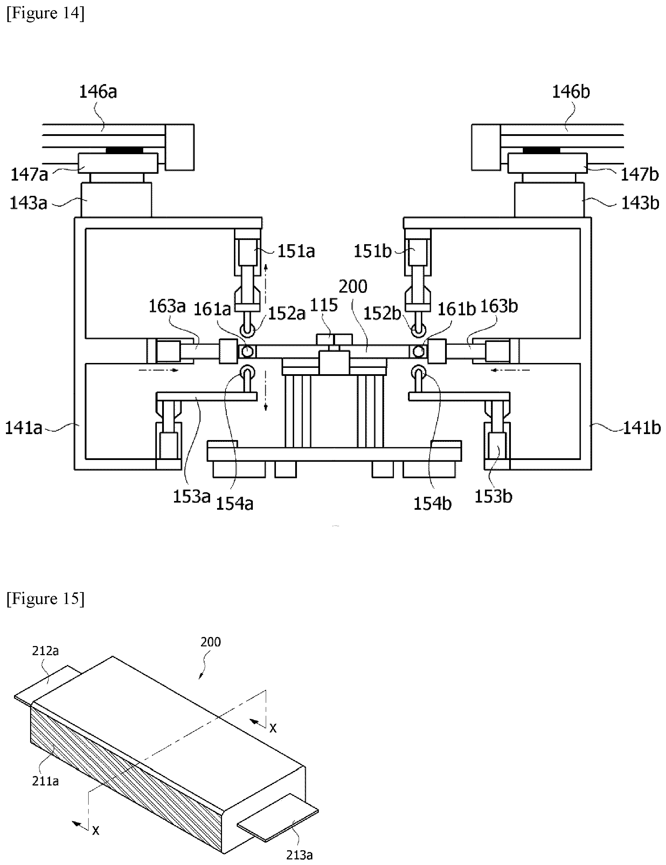

A gripper (115) may be provided on the seating part (110). The gripper (115) may fix the stacked electrode body (200) at the side sealing station. Specifically, the gripper (115) may be provided to restrict the movement of the stacked electrode body (200) by grabbing both of the short sides of the stacked electrode body (200). Here, the short side of the stacked electrode body (200) refers to the side portion where the lead tab is installed, and the long side means the side portion where the lead tab is not installed. As shown in Figure. 15, the lead tab (212a, 213a) may be formed on opposite short sides of the rectangular stacked electrode body (200), and the lead tab may be formed on only one short side. In some cases, a stacked electrode body may be manufactured in a shape in which the lead tab is formed on the long sides, but for convenience, in this specification, the long sides refer to non-electrode sides facing each other.

The side sealing device (100) for a stacked electrode body according to a preferred example of the present invention may comprise press parts (150a, 150b).

The width of the separator is greater than the widths of the positive electrode and the negative electrode toward the long sides of the stacked electrode body. That is, the separator extends further to both sides toward the long sides of the stacked electrode body than the positive electrode and the negative electrode to form ends. This may be referred to as a separator extension portion. In other words, the positive electrode and the negative electrode are not located directly above and below the separator ends or the separator extension portions toward the long sides, and upper and lower gaps are formed between the separators by the height or thickness of the positive electrode or negative electrode. Such ends or extension portions of the separator may be damaged due to weak rigidity. Then, distortion may occur in the laminated state in the subsequent processes.

The press parts (150a, 150b) may be provided to form sealing surfaces by allowing a plurality of separators positioned toward the long sides with the upper and lower gaps therebetween to come into close contact with each other. That is, they may be provided to pressurize the plurality of separators to be curved or bent, and more specifically, to pressurize the plurality of bent separators to come into close contact with each other.

It is preferable that the pressurization force of the press parts (150a, 150b) is transmitted from the uppermost and lowermost separators to the middle separator based on the height, that is, the thickness, of the stacked electrode body. The bending angle of the separators at the uppermost end and the lowermost end is the largest, and the bending angle of the separators at the center may be minimized or maintained horizontally.

That is, all the remaining separators except for the separators at the uppermost and lowermost ends may be pressurized by pressurization of the press parts (150a, 150b) so as to come into close contact with the neighboring separators. The separator located at the upper portion pressurizes the separator located directly below downward while being pressurized downward by the separator located directly above according to the pressurization of the press. The separator located at the lower portion pressurizes the separator located directly above upward while being pressurized upward by the separator located directly below according to the pressurization of the press. Through this pressurization process, the separators converge to the center while being in close contact with each other. Therefore, the separators toward the long sides form sealing surfaces by such close contact.

The press parts (150a, 150b) may be provided in the form of a press block, and may also be provided in the form of a roller. Details of the press part will be described below.

The side sealing device (100) for a stacked electrode body according to a preferred example of the present invention may comprise reinforcing parts (160a, 160b) further reinforcing the sealing surfaces formed through the press parts (150a, 150b).

The sealing surfaces are formed by the separators that the separators are bent to be brought into close contact with each other by pressurizing the ends or extension portions of the separators through the press parts (150a, 150b). However, the bent separators have a tendency to return to their original shape over time, and in particular, this tendency can be more prominent as they are toward both upper and lower ends. That is, the close contact between the separators may be released.

Therefore, a means capable of maintaining close contact between the separators more firmly is required, and to this end, the present example may comprise sealing surface reinforcing parts.

The reinforcing parts (160a, 160b) may be provided so that in the sealing surfaces formed by the ends of the separators, a fixing force is formed between the ends of the separators or a fixing force is imparted thereto. Such a fixing force may be formed by heat fusion, and the fixing force may be imparted through a shape of a heating bar. Details of the reinforcing part will be described below.

The side sealing device (100) for a stacked electrode body of the present invention comprises an inspection part (120) inspecting alignment of the stacked electrode body. The inspection part (120) may inspect the alignment through vision. Therefore, the inspection part (120) may be referred to as a vision inspection part (120). The vision inspection part (120) may be installed above the seating part (110). The vision inspection part (120) photographs the stacked electrode body (200) and inspects the alignment of the long sides of the stacked electrode body (200) based on the seating part (110). The vision inspection part (120) may inspect the degree to which the long sides of the stacked electrode body (200) match the preset alignment line (L).

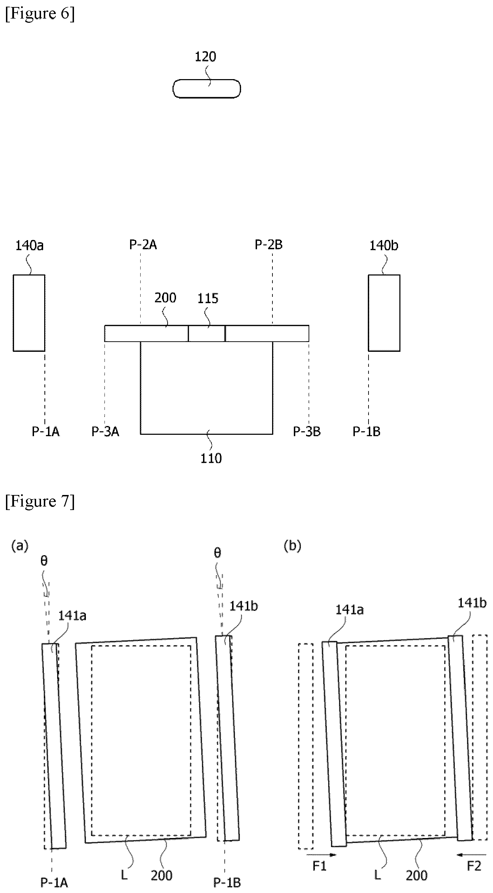

For example, as shown in Figure 7, the vision inspection part (120) calculates an alignment angle (θ) of the long side of the stacked electrode body (200) with respect to the alignment line (L) of the seating part (110). The alignment angle (θ) is an angle of the long side of the stacked electrode body (200) with respect to the alignment line (L) of the seating part (110).

For example, when the long side of the stacked electrode body (200) matches the preset alignment line (L), the alignment angle (θ) is calculated as "0". When the long side of the stacked electrode body (200) is distorted by 5° with respect to the preset alignment line (L), the alignment angle (θ) is calculated as "5°".

The side sealing device (100) according to the present example may be referred to as a device for forming a sealing surface toward the long side of the stacked electrode body (200) and reinforcing the sealing surface. Formation of the sealing surface and reinforcement of the sealing surface must be performed uniformly over both of the long sides. Therefore, it is preferable that sealing is performed after alignment of the stacked electrode body (200) is performed, or sealing is performed by reflecting or correcting misalignment.

The control part (130) may receive the long side alignment information sensed by the vision inspection part (120), and control the subsequent side sealing process to be precisely performed. Details of performing the sealing surface forming process by reflecting the alignment information will be described below.

According to one example of the present invention which is preferred, the side sealing device may comprise a main body or a main body part (140a, 140b) for performing a sealing surface forming process. Since the sealing surface forming process may be performed on two facing long sides of the stacked electrode body (200), it is preferable that a pair of main body parts is provided. The two main body parts (140a, 140b) are disposed to face the long sides of the stacked electrode body (200) with the seating part (110) interposed therebetween, so that sealing surface may be formed on both of the long sides of the stacked electrode body (200) at the same time. Of course, one main body part is provided, so that a sealing surface may be formed on one side of the long sides, and then a sealing surface may be formed on the other side of the long sides. In this case, the entire main body part may be moved, or the seating part may be moved. Specifically, the main body part may rotate 180 degrees, or the seating part may rotate 180 degrees.

In this example, for convenience of explanation, it is assumed that two main body parts (140a, 140b) are provided, and in this case, it may be referred to as a "first main body part (140a)" and a "second main body part (140b)" separately. The two main body parts may be formed to be symmetrical to each other and perform symmetrical operations. Therefore, redundant descriptions will be omitted except for differences between the first main body part (140a) and the second main body part (140b).

The main body part, which is described below, and constitutions constituting the same may be a first main body part, and constitutions constituting the same, or may be a single main body part, and constitutions constituting the same.

The main body part (140a) may be installed to face one side of the long sides of the stacked electrode body (200) from one side of the seating part (110).

The main body part (140a) may comprise a main body frame (141a), where a press part (150a) and a reinforcing part (160a) may be provided in the main body frame (141a). Formation and reinforcement of the sealing surface may be performed while the press part (150a) and the reinforcing part (160a) are relatively moved in the main body frame (141a).

In addition, the main body part (140a) may be a device for adjusting the position and angle of the press part (150a) and the reinforcing part (160a). That is, it may be a device that allow the press part (150a) and the reinforcing part (160a) to have appropriate positions and angles based on the alignment information, and to perform formation and reinforcement of the sealing surface.

As described above, the press part (150a) may be a device comprising a rolling part and pressurizing through a press of the rolling part. In addition, the press part (150a) may be referred to as a rolling part (150a). Also, the reinforcing part (160a) may comprise a heating part heating the separators. Specifically, the reinforcing part (160a) may comprise a heating part that heats and fuses the ends of the separators forming the sealing surface. In addition, the reinforcing part (160a) may be referred to as a heating part (160a). The heating part (160a) may comprise a heater or a heating block.

In the main body frame (141a), a rolling part (150a) and a heating part (160a) may be installed. Also, the main body frame (141a) may be coupled to the angle adjusting part (143a) and the position adjusting part (145a). The main body frame (141a) may have, as a Korean Alphabet 3^{rd} character ( 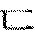 ) structure, a structure in which a portion toward the long side of the stacked electrode body (200) is opened.

On the opened side of the main body frame (141a), a rolling part (150a) is installed to be capable of elevating in the height direction (z) of the stacked electrode body, and a heating part (160a) is installed to be capable of moving back and forth in the width direction (y) of the stacked electrode body.

Specifically, the rolling part (150a) may comprise an upper roller (152a) and a lower roller (154a).

The upper roller (152a) may be positioned to extend downward from the upper side of the main body frame (141a). The lower roller (154a) may be positioned to extend upward from the lower side of the main body frame (141a).

The heating part (160a) may be positioned to extend in the direction of the seating part from the middle portion of the main body frame. The heating part (160a) may be positioned between the upper roller (152a) and the lower roller (154a).

Since the rolling part (150a) and the heating part (160a) are mounted on the main body frame (141a), they may be provided to be movable integrally with the main body frame (141a).

Meanwhile, as described above, alignment information of an electrode body on which a sealing surface is to be formed may be generated through the vision inspection part. Based on the alignment information, the control part (130) needs to correct the positions and/or angles of the rolling part (150a) and the heating part (160a).

According to this example, the rolling part (150a) and the heating part (160a) are mounted on the main body frame (141a), so that the positions and/or angles of the rolling part (150a) and the heating part (160a) may be corrected through adjustment of the position and/or angle of the main body frame (141a). This is to form a uniform sealing surface over the entire long side. That is, it is to pressurize at the same pressurizing depth at each position over the entire long side.

Referring to Figure 7, the angle adjusting part (143a) may be coupled to the main body frame (141a) to rotate the main body frame (141a) from a first reference position (P-1A) by an alignment angle (θ) based on long side alignment information. Here, the first reference position (P-1A) may refer to a position where the main body frame (141a) is disposed in parallel with the alignment line (L) of the seating part (110).

That is, the angle adjusting part (143a) may adjust the position of the main body frame (141a) so that the rolling part (150a) and the heating part (160a) installed on the main body frame (141a) are located side by side on one side of the long sides of the stacked electrode body (200).

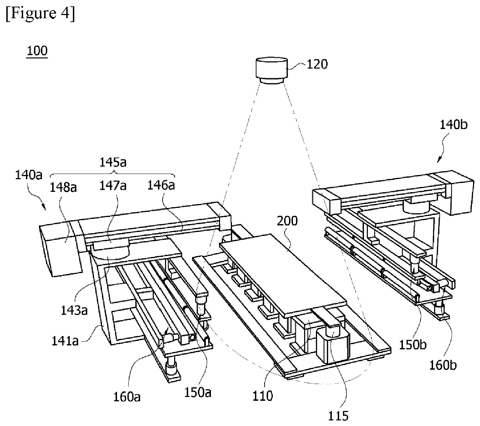

Referring to Figure 4, the position adjusting part (145a) may be coupled to the angle adjusting part (143a) to be connected to the main body frame (141a). The position adjusting part (145a) may comprise a Y-axis guide rail (146a), a Y-axis moving member (147a), and a driving motor (148a).

The Y-axis guide rail (146a) may be provided above the main body frame (141a) in the width direction (y) of the stacked electrode body. The Y-axis moving member (147a) may be installed in the Y-axis guide rail (146a) to be movable back and forth.

The Y-axis guide rail (146a) may be fixed to a ceiling surface as a configuration that is always fixed.

The Y-axis moving member (147a) may be coupled to the driving motor (148a) to be moved forward or backward along the Y-axis guide rail (146a) when the driving motor (148a) operates. The Y-axis moving member (147a) is connected to the main body frame (141a). Therefore, the main body frame may move forward or backward in the direction of the electrode body by the operation of the driving motor (148a) as a whole. This means the forward or backward movement of the rolling part (150a) and the heating part (160a), and the forward or backward movement here means a movement for correcting the position before forming the sealing surface, rather than a movement for directly forming the sealing surface.

The angle adjusting part (143a) may be coupled to the Y-axis moving member (147a). That is, the angle adjusting part (143a) may be provided between the Y-axis moving member (147a) and the main body frame (141a).

The main body frame (141a) may be coupled to the angle adjusting part (143a) to be connected to the Y-axis moving member (147a). While the main body frame (141a) is moved in the movement direction of the Y-axis moving member (147a), its position with respect to the stacked electrode body (200) is adjusted.

The angle adjusting part (143a) may be provided to rotate the main body frame (141a) in a clockwise direction or counterclockwise direction.

The position adjusting part (145a) and the angle adjusting part (143a) may adjust the angle and position of the main body frame (141a) for each step preset in the control part (130).

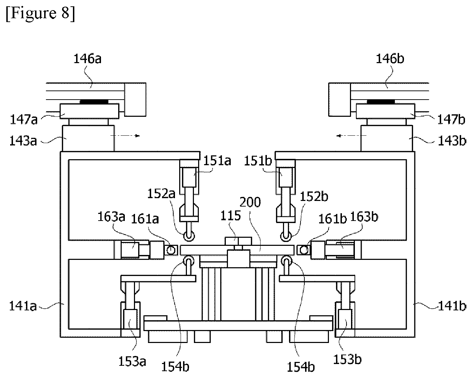

Referring to Figure 8, for example, when pre-forming the long side of the stacked electrode body (200), the position adjusting part (145a) controls the operation of the driving motor (148a) so that the Y-axis moving member (147a) is moved from the first reference position (P-1A) to a first entry position (P-2A) along the Y-axis guide rail (146a). Here, the entry position (P-2A) is a position preset in the control part (130) between the center of the stacked electrode body (200) and one side of the long sides of the stacked electrode body (200).

The position adjusting part (145a) stops the operation of the driving motor (148a) when the Y-axis moving member (147a) reaches the first entry position (P-2A). When the rolling part (150a) pressurizes the stacked electrode body (200) up and down, the position adjusting part (145a) controls the operation of the first driving motor (148a) so that the Y-axis moving member (147a) moves backward from the first entry position (P-2A) toward the first reference position (P-1A).

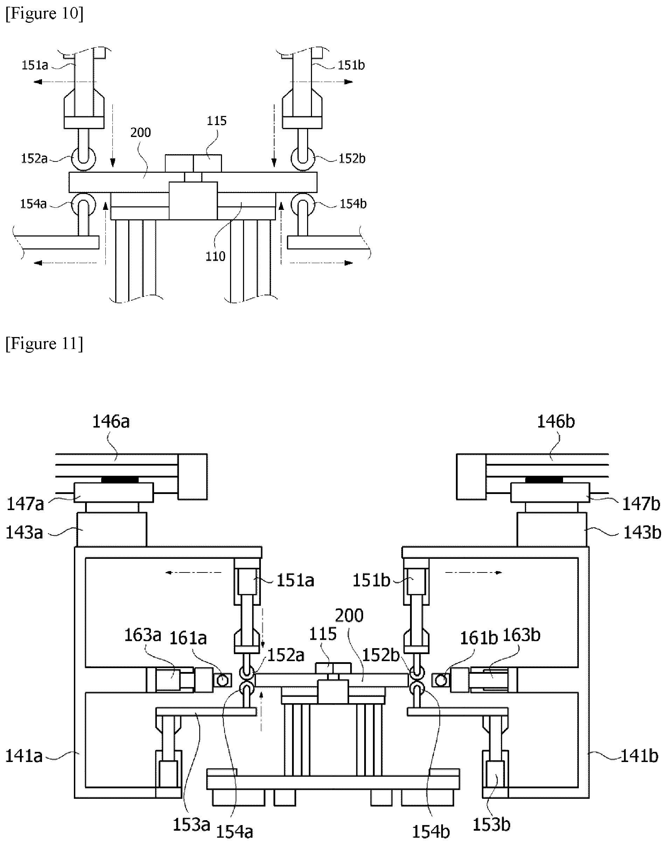

In this process, referring to Figure 11, the rolling part (150a) pressurizes and rolls the stacked electrode body (200) up and down while moving backward along with the main body frame (141a), whereby it may pre-form one side of the long sides of the stacked electrode body (200) so that the ends of the separators (211) at one side of the long sides of the stacked electrode body (200) are gathered in an outward direction of the stacked electrode body (200) and come into contact with each other. That is, the sealing surface may be formed.

In the pre-formed stacked electrode body (200), the ends of the separators (211) closely contact each other to form a sealing surface. For example, the long side of the pre-formed stacked electrode body (200) may form a triangular cross section or trapezoidal cross section. In this example, for convenience of explanation, the surface formed of the ends of the separators (211) at one side of the long sides of the stacked electrode body (200) is referred to as a "sealing surface (211a, 211b)".

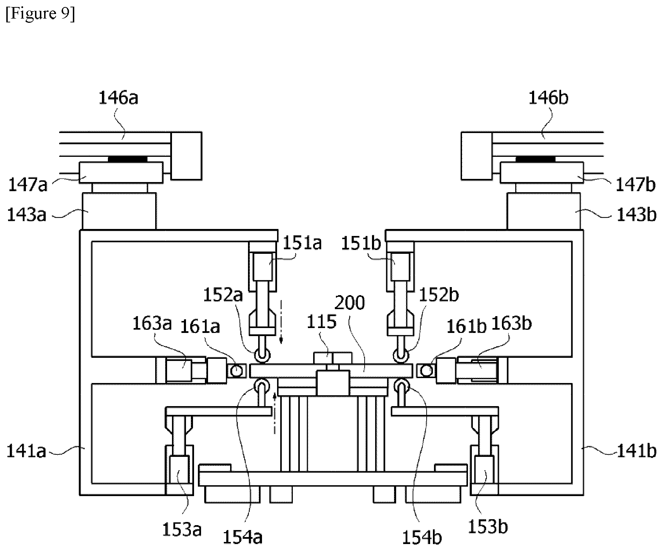

Referring to Figures 9 and 10, the rolling part (150a) may comprise an upper elevating member (151a), an upper roller (152a), a lower elevating member (153a), and a lower roller (154a).

The upper roller (152a) may be installed on the upper end of the main body frame (141a) in parallel in the longitudinal direction (x) of the stacked electrode body. The upper roller (152a) is a roller pressurizing and rolling the separator extension portion on the top of the stacked electrode body (200).

The upper elevating member (151a) is coupled to the upper end of the main body frame (141a) and the upper roller (152a). The upper elevating member (151a) lifts or lowers the upper roller (152a) in the height direction (z) of the stacked electrode body.

When the Y-axis moving member (147a) reaches the first entry position (P-2A), the upper elevating member (151a) operates so that the upper roller (152a) pressurizes the separator extension portion on the top of the stacked electrode body (200) while descending.

The upper elevating member (151a) elevates the upper roller (152a) when the Y-axis moving member (147a) moves from the first entry position (P-2A) to the first reference position (P-1A). Upon the elevating operation of the upper elevating member (151a), the pressurization of the upper roller (152a) on the stacked electrode body (200) is released. Here, it is preferable that the pressurization by the upper roller (152a) is not applied directly to the electrode, and is applied only to the extension portions of the separators.

The lower roller (154a) is installed on the main body frame (141a) in parallel in the longitudinal direction (x) of the stacked electrode body. The lower roller (154a) is a roller pressurizing and rolling the separator extension portions upward from the lower portion of the stacked electrode body (200). The lower roller (154a) is installed at the lower end of the main body frame (141a) to face the upper roller (152a).

The lower elevating member (153a) is coupled to the lower end of the main body frame (141a) and the lower roller (154a). The lower elevating member (153a) lifts or lowers the lower roller (154a) in the height direction (z) of the stacked electrode body.

When the Y-axis moving member (147a) reaches the first entry position (P-2A), the lower elevating member (153a) operates so that the lower roller (154a) pressurizes the separator extension portions upward from the bottom of the stacked electrode body (200) while lifting.

The lower elevating member (153a) lowers the lower roller (154a) when the Y-axis moving member (147a) is moved from the first entry position (P-2A) to the first reference position (P-1A). Upon downward operation of the lower elevating member (153a), the pressurization of the lower roller (154a) on the stacked electrode body (200) is released.

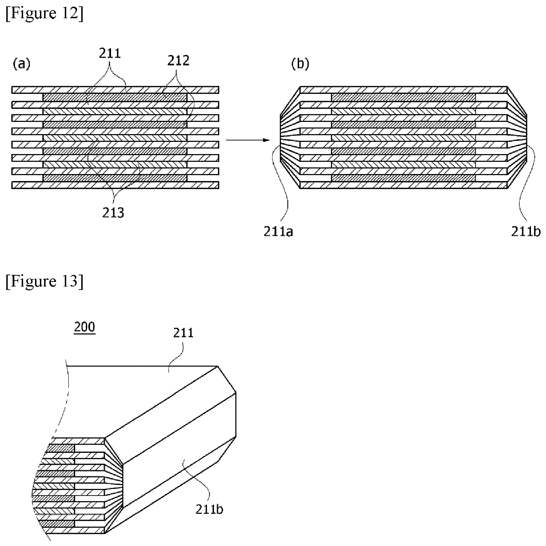

Referring to Figure 12, the stacked electrode body (200) pre-forms a sealing surface (211a) by the operation of the main body part (140a) and the rolling part (150a) as above so that the ends of the separators (211) abut to each other up and down on one side of the long sides of the stacked electrode body (200).

Referring to Figure 14, the heating part (160a) may pressurize and heat the sealing surface (211a) to strengthen the sealing surface on one side of the long sides of the stacked electrode body (200). That is, the sealing surface may be strengthened by additionally imparting a fixing force to the generated sealing surface.

The heating part (160a) may be installed on the main body frame (141a). The heating part (160a) may comprise a heating bar (161a) and a heating bar back-and-forth moving member (163a).

The heating bar (161a) pressurizes and heats the first sealing surface (211a) while being in surface contact with the sealing surface (211a) of the stacked electrode body (200). The heating bar (161a) is disposed in parallel with one side of the long sides of the stacked electrode body (200) by adjusting the position of the main body part (140a) as described above.

The heating bar back-and-forth moving member (163a) may be coupled to the heating bar (161a) and the main body frame. The heating bar back-and-forth moving member (163a) moves the first heating bar (161a) back and forth in the width direction (y) of the stacked electrode body.

The heating part (160a) controls the operation of the heating bar back-and-forth moving member (163a) so that the heating bar (161a) moves to a first heating position (P-3A) after the operation of the rolling part (150a) is completed. Here, the first heating position (P-3A) refers to the position of the sealing surface (211a).

The heating bar (161a) is moved forward to the first heating position (P-3A) by the heating bar back-and-forth moving member (163a). Subsequently, the heating bar (161a) provides heat to the sealing surface (211a) for a predetermined heating time while being in surface contact with the sealing surface (211a) at the first heating position (P-3A).

After the predetermined heating time has elapsed, the heating bar (161a) is moved backward from the first heating position (P-3A) to the original position by the heating bar back-and-forth moving member (163a).

By the operation of the heating part (160a) as above, the sealing surface on one side of the long sides of the stacked electrode body (200) may be strengthened more firmly.

Meanwhile, the sealing surface (211a) is a sealing surface finally formed by thermal pressurization of the heating bar, which may have a shape different from the sealing surface pre-formed by pressurization of the roller.

Specifically, the sealing surface pressurized and formed by the roller is formed by bending the extension portions of the separators and pressurizing them into close contact. If the extension portions of the separators have the same length before pressurizing, the extension lengths after bending may be different from each other. That is, the extension length becomes shorter toward the upper end and the lower end, and the extension length becomes longer toward the center. In this case, the cross section of the sealing surface formed by the extension portions may have a substantially triangular shape.

Pressurization through the heating bar after pressurization by the roller needs to provide a sufficient moving distance. Insufficient movement during pressurization of the heating bar may heat only the extension portions of the separators in the central portion, but may not heat the extension portions of the separators in the upper end and lower end portions. Therefore, it is preferable that upon pressurization of the heating bar, the heating bar moves sufficiently to the extent that the heating bar may contact the separator extension portions of the upper end and lower end portions.

A sealing surface having a substantially trapezoidal cross section may be finally formed by thermal fusion with the heating bar. In the sealing surface, the vertically adjacent separator extension portions are coupled to each other by thermal fusion. That is, all of the separator extension portions are coupled to each other by thermal fusion, so that the entire sealing surface forms a connection rib or a connection wall connecting all of the separator extension portions. Through this, the rigidity of the separator extension portions can be very effectively reinforced.

As described above, according to the present example, a pair of main body parts (140a, 140b) may be provided, and thus the respective constitutions may also be provided symmetrically. The adjustment of the positions and angles of the main body frames (141a, 141b) may be simultaneously performed from both sides, and driving of the rolling parts (150a, 150b) and driving of the heating parts (160a, 160b) may also be performed simultaneously from both sides.

Therefore, descriptions of the second main body part (140b) and its constitutions, and descriptions of the operations will be omitted.

Hereinafter, a control method of a sealing device according to one example of the present invention will be described in more detail.

The control part (130) may receive the long side alignment information from the vision inspection part to calculate the alignment angle (θ), the entry position and the heating position, and may control the operations of the angle adjusting parts (143a, 143b) and the position adjusting parts (145a, 145b), the rolling parts (150a, 150b) and the heating parts (160a, 160b) for each preset step.

Here, the entry position is a position set between the long side of the stacked electrode body (200) and the center of the stacked electrode body (200). The heating position is a position on the long side of the stacked electrode body (200) provided with the sealing surface.

In this example, for convenience of explanation, the entry positions will be described by dividing them into "a first entry position (P-2A) and a second entry position (P-2B)". Referring to Figure 6, the first entry position (P-2A) is an arbitrary position on one side of the long sides of the stacked electrode body (200). Then, the second entry position (P-2B) is an arbitrary position on the other side of the long sides of the stacked electrode body (200).

The control part (130) controls the operation of the angle adjusting parts (143a, 143b) so that the main body frames (141a, 141b) are rotated by an alignment angle (θ) from the reference position. The control part (130) controls the operation of the position adjusting parts (145a, 145b) so that the main body frames (141a, 141b) are moved forward from the reference position to the entry position in the width direction (y) of the stacked electrode body.

Continuously, the control part (130) controls the operations of the position adjusting parts (145a, 145b) and the rolling parts (150a, 150b) so that the rolling parts (150a, 150b) pressurizes the stacked electrode body (200) up and down at the entry position, and the rolling parts (150a, 150b) pressurize and roll the long sides of the stacked electrode body (200) up and down while the main body frames (141a, 141b) are moved backward from the entry position to the reference position by the position adjusting parts (145a, 145b).

Next, the control part (130) controls the operations of the heating bar back-and-forth moving members (163a, 163b) of the heating part and the position adjusting parts (145a, 145b) after the operation of the rolling parts (150a, 150b) is completed so that the heating bars (161a, 161b) of the heating part are moved to the heating position by the main body frames (141a, 141b).

Subsequently, the control part (130) controls the operation of the heating parts (160a, 160b) so that when the heating bars (161a, 161b) reach the heating position, they pressure and heat the sealing surfaces at the predetermined heating temperature for the predetermined heating time while being in surface contact with the sealing surfaces of the stacked electrode body (200).

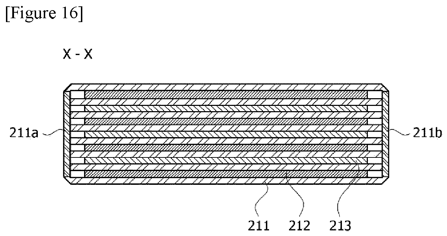

In the conventional sealing process of the stacked electrode body (200), the damage of the upper end separator (211) and the lower end separator (211) in the stacked electrode body (200) due to the pressure-sensitive adhesive tape may occur. However, referring to Figures 15 and 16, according to one example of the present invention, both side surfaces of the stacked electrode assembly (200) are sealed by the heating method, so that it is possible to provide a stacked electrode body capable of effectively preventing the separator damage, and a secondary battery comprising the same.

Also, according to one example of the present invention, both side surfaces of the stacked electrode body (200) are subjected to the heating method to fix the stacked electrode body (200), so that conventionally, the step in the contact surface between the pressure-sensitive adhesive tape and the stacked electrode body (200), and the overlapping step between the pressure-sensitive adhesive tapes are removed, whereby it is possible to prevent lithium precipitation occurring in a portion where the conventional pressure-sensitive adhesive tape sticks to the stacked electrode body (200).

In addition, according to one example of the present invention, both sides of the stacked electrode body (200) are subjected to the heating method to fix the stacked electrode body (200), so that in a jig formation process of the stacked electrode body (200), it is possible to secure the uniformity of the J/F surface pressure applied to the stacked electrode body (200).

Furthermore, according to one example of the present invention, both side surfaces of the stacked electrode body (200) are subjected to the heating method to fix the stacked electrode body (200), so that it is possible to prevent inflow of foreign substances to the stacked electrode body (200) during the activation process.

In addition, compared to the matter that the stacked electrode body (200) is sealed using the conventional pressure-sensitive adhesive tape, according to one example of the present invention, as the separators (211) constituting the stacked electrode body (200) are sealed toward the long sides of the stacked electrode body (200), the thickness of the stacked electrode body (200) is reduced by the thickness of the pressure-sensitive adhesive tape surrounding the stacked electrode body (200), so that it is possible to promote ultra-slimming the stacked electrode body (200).

When the conventional stacked electrode body (200) is sealed while the pressure-sensitive adhesive tape surrounds the outer surface of the stacked electrode body (200), there has been a concern that in the process in which the pressure-sensitive adhesive tape sticks to the stacked electrode body (200), distortion of the separators (211), the positive electrodes (212) and the negative electrodes (213) constituting the stacked electrode body (200) may occur.

On the contrary, according to one example of the present invention, as the long sides of the stacked electrode body (200) are sealed in a state where the gripper (115) holds the short sides of the stacked electrode body (200), it is possible to improve the quality of the stacked electrode body (200) by preventing distortion of the separators (211), the positive electrodes (212) and the negative electrodes (213) constituting the stacked electrode body (200).

The scope of the present invention is indicated by the following claims rather than the above detailed description, and all changes or modifications derived from the meaning and scope of the claims and their equivalent concepts should be construed as being included in the scope of the present invention.

### Industrial Applicability

It is described in the detailed description of the invention.

## Claims

1. A side sealing device (100) for a stacked electrode body, **characterized by** comprising:
a seating part (110) in which a stacked electrode body (200) cross-laminated with positive electrodes (212), separators (211), and negative electrodes (213) is seated;
a press part (150a, 150b) pressurizing both sides of non-electrode sides of the stacked electrode body (200) up and down to form sealing surfaces (211a, 211b) made of the separators (211) so that ends of the separators (211) come into close contact with each other up and down;
a reinforcing part (160a, 160b) imparting a fixing force between the separators (211) forming the sealing surface (211a, 211b) to reinforce the sealing surface (211a, 211b); and
an inspection part (120) generating alignment information of the stacked electrode body (200) seated on the seating part (110).

2. The side sealing device for a stacked electrode body according to claim 1, wherein
the press part (150a, 150b) is provided to pressurize the separator extension portions extending further in a width direction of the stacked electrode body (200) than the positive electrodes (212) or the negative electrodes (213).

3. The side sealing device for a stacked electrode body according to claim 2, wherein
the press part (150a, 150b) comprises a rolling part (150a, 150b) performing rotational pressurization.

4. The side sealing device for a stacked electrode body according to claim 3, wherein
the rolling part (150a, 150b) performs pressurization such that the separators (211) have a bending degree increasing, based on a height direction of the stacked electrode body (200), from center toward upper and lower ends.

5. The side sealing device for a stacked electrode body according to claim 4, wherein
the reinforcing part (160a, 160b) comprises a heating part (160a, 160b) which heats the ends of the separators (211) to impart a fixing force thereto.

6. The side sealing device for a stacked electrode body according to claim 5, wherein
the heating part (160a, 160b) pressurizes the ends of the separators (211) toward the center of the stacked electrode body (200) based on the width direction of the stacked electrode body (200) to form the sealing surface (211a, 211b) through thermal fusion of the separators (211).

7. The side sealing device for a stacked electrode body according to claim 6, wherein
the sealing surface (211a, 211b) by thermal fusion is formed on an entire extension portion of the up and down-laminated separators (211), and a cross section toward the non-electrode side of the stacked electrode body (200) is formed in a trapezoidal shape by the separators (211) of the upper and lower ends, and the sealing surface (211a, 211b).

8. The side sealing device for a stacked electrode body according to claim 7, wherein
the heating part (160a, 160b) comprises:
a heating bar (161a, 161b) arranged in parallel with a longitudinal direction of the stacked electrode body (200); and
a back-and-forth moving member (163a, 163b) which moves the heating bar (161a, 161b) back and forth in the width direction of the stacked electrode body (200).

9. The side sealing device for a stacked electrode body according to claim 1, further comprising a control part (130) controlling operation of the press part (150a, 150b) and the reinforcing part (160a, 160b), and controlling positions and angles of the press part (150a, 150b) and the reinforcing part (160a, 160b) to be corrected according to the alignment information generated by the inspection part (120).

10. The side sealing device for a stacked electrode body according to claims 1 to 9, further comprising a main body frame (141a, 141b) provided with the press part (150a, 150b) and the reinforcing part (160a, 160b), and comprising a main body part (140a, 140b) adjusting positions and angles of the press part and the reinforcing part (160a, 160b) through movement and rotation of the main body frame (141a, 141b).

11. The side sealing device for a stacked electrode body according to claim 10, wherein
the press part (150a, 150b) is provided to extend downward and upward from upper and lower ends of the main body frame (141a, 141b), respectively, and the reinforcing part (160a, 160b) is provided to extend laterally from the main body frame (141a, 141b) toward the stacked electrode body (200).

12. The side sealing device for a stacked electrode body according to claim 10, wherein the main body part (140a, 140b) comprises:
a position adjusting part (145a, 145b) connected to the main body frame (141a, 141b) to integrally move the main body frame (141a, 141b) back and forth in a width direction of the stacked electrode body (200), and/or
an angle adjusting part (143a, 143b) connected to the main body frame (141a, 141b) to integrally rotate the main body frame (141a, 141b) in a horizontal direction.

13. A secondary battery comprising a stacked electrode body (200) formed by cross-laminating positive electrodes (212), separators (211), and negative electrodes (213), **characterized in that**
sealing surfaces (211a, 211b) formed by closely contacting extension portions of the separators (211) up and down with each other are provided in both sides of non-electrode sides of the stacked electrode body (200),
the separator extension portion has a bending degree increasing, based on a height of the stacked electrode body (200), from center toward both upper and lower ends,
a fixing force is imparted between the extension portions of the separators (211) by thermal pressurization on the sealing surface (211a, 211b), and
the sealing surface (211a, 211b) by thermal pressurization is formed on an entire extension portion of up and down-laminated separators (211), and a cross section toward the non-electrode side of the stacked electrode body (200) is formed in a trapezoidal shape by the separators (211) of upper and lower ends, and the sealing surface (211a, 211b).

## Patentansprüche

1. Seitenabdichtungsvorrichtung (100) für einen gestapelten Elektrodenkörper, **dadurch gekennzeichnet, dass** sie aufweist:
einen Auflageabschnitt (110), auf dem ein gestapelter Elektrodenkörper (200), in den positive Elektroden (212), Separatoren (211) und negative Elektroden (213) kreuzweise geschichtet sind, aufliegt;
einen Pressabschnitt (150a, 150b), der beide Nicht-Elektrodenseiten des gestapelten Elektrodenkörpers (200) von oben und unten mit Druck beaufschlagt, um aus den Separatoren (211) bestehende Dichtflächen (211a, 211b) derart zu bilden, dass Enden der Separatoren (211) von oben und unten in engem Kontakt miteinander in Kontakt stehen;
einen Verstärkungsabschnitt (160a, 160b), der zwischen den die Dichtfläche (211a, 211b) bildenden Separatoren (211) eine Fixierkraft erzeugt, um die Dichtfläche (211a, 211b) zu verstärken; und
einen Prüfabschnitt (120), der Ausrichtungsinformationen des auf dem Auflageabschnitt (110) angeordneten gestapelten Elektrodenkörpers (200) erzeugt.

2. Seitenabdichtungsvorrichtung für einen gestapelten Elektrodenkörper nach Anspruch 1, wobei der Pressabschnitt (150a, 150b) so ausgebildet ist, dass er Separator-Verlängerungsabschnitte, die sich in einer Breitenrichtung des gestapelten Elektrodenkörpers (200) weiter erstrecken als die positiven Elektroden (212) oder die negativen Elektroden (213), mit Druck beaufschlagt.

3. Seitenabdichtungsvorrichtung für einen gestapelten Elektrodenkörper nach Anspruch 2, wobei der Pressabschnitt (150a, 150b) einen Rollabschnitt (150a, 150b) aufweist, der eine rotatorische Druckbeaufschlagung ausführt.

4. Seitenabdichtungsvorrichtung für einen gestapelten Elektrodenkörper nach Anspruch 3, wobei der Rollabschnitt (150a, 150b) eine Druckbeaufschlagung derart ausführt, dass der Biegegrad der Separatoren (211), bezogen auf eine Höhenrichtung des gestapelten Elektrodenkörpers (200), von der Mitte zu den oberen und unteren Enden hin zunimmt.

5. Seitenabdichtungsvorrichtung für einen gestapelten Elektrodenkörper nach Anspruch 4, wobei der Verstärkungsabschnitt (160a, 160b) einen Heizabschnitt (160a, 160b) aufweist, der die Enden der Separatoren (211) erwärmt, um ihnen eine Fixierkraft zu verleihen.

6. Seitenabdichtungsvorrichtung für einen gestapelten Elektrodenkörper nach Anspruch 5, wobei der Heizabschnitt (160a, 160b) die Enden der Separatoren (211) in Breitenrichtung des gestapelten Elektrodenkörpers (200) zur Mitte des gestapelten Elektrodenkörpers (200) hin mit Druck beaufschlagt, um die Dichtfläche (211a, 211b) durch thermisches Verschmelzen der Separatoren (211) zu bilden.

7. Seitenabdichtungsvorrichtung für einen gestapelten Elektrodenkörper nach Anspruch 6, wobei die durch thermisches Verschmelzen gebildete Dichtfläche (211a, 211b) über den gesamten Verlängerungsabschnitt der übereinander gestapelten Separatoren (211) ausgebildet ist und ein Querschnitt auf der Nicht-Elektrodenseite des gestapelten Elektrodenkörpers (200) durch die Separatoren (211) am oberen und unteren Ende und die Dichtfläche (211a, 211b) trapezförmig ausgebildet ist.

8. Seitenabdichtungsvorrichtung für einen gestapelten Elektrodenkörper nach Anspruch 7, wobei der Heizabschnitt (160a, 160b) aufweist:
einen Heizstab (161a, 161b), der parallel zu einer Längsrichtung des gestapelten Elektrodenkörpers (200) angeordnet ist; und
ein Hin- und Herbewegungselement (163a, 163b), das den Heizstab (161a, 161b) in der Breitenrichtung des gestapelten Elektrodenkörpers (200) hin und her bewegt.

9. Seitenabdichtungsvorrichtung für einen gestapelten Elektrodenkörper nach Anspruch 1, ferner aufweisend einen Steuerabschnitt (130), der den Betrieb des Pressabschnitts (150a, 150b) und des Verstärkungsabschnitts (160a, 160b) steuert und die Positionen und Winkel des Pressabschnitts (150a, 150b) und des Verstärkungsabschnitts (160a, 160b) steuert, die gemäß den Ausrichtungsinformationen zu korrigieren sind.

10. Seitenabdichtungsvorrichtung für einen gestapelten Elektrodenkörper nach einem der Ansprüche 1 bis 9, ferner aufweisend:
einen Hauptkörperrahmen (141a, 141b), an dem der Pressabschnitt (150a, 150b) und der Verstärkungsabschnitt (160a, 160b) vorgesehen sind, und
einen Hauptkörperabschnitt (140a, 140b), der durch Bewegen und Drehen des Hauptkörperrahmens (141a, 141b) die Positionen und Winkel des Pressabschnitts (150a, 150b) und des Verstärkungsabschnitts (160a, 160b) einstellt.

11. Seitenabdichtungsvorrichtung für einen gestapelten Elektrodenkörper nach Anspruch 10, wobei der Pressabschnitt (150a, 150b) so vorgesehen ist, dass er sich vom oberen bzw. unteren Ende des Hauptkörperrahmens (141a, 141b) nach unten bzw. nach oben erstreckt, und
der Verstärkungsabschnitt (160a, 160b) so vorgesehen ist, dass er sich von dem Hauptkörperrahmen (141a, 141b) seitlich zu dem gestapelten Elektrodenkörper (200) hin erstreckt.

12. Seitenabdichtungsvorrichtung für einen gestapelten Elektrodenkörper nach Anspruch 10, wobei der Hauptkörperabschnitt (140a, 140b) aufweist:
einen Positionseinstellabschnitt (145a, 145b), der mit dem Hauptkörperrahmen (141a, 141b) verbunden ist, um den Hauptkörperrahmen (141a, 141b) als Ganzes in einer Breitenrichtung des gestapelten Elektrodenkörpers (200) hin und her zu bewegen, und/oder
einen Winkeleinstellabschnitt (143a, 143b), der mit dem Hauptkörperrahmen (141a, 141b) verbunden ist, um den Hauptkörperrahmen (141a, 141b) als Ganzes in einer horizontalen Richtung zu drehen.

13. Sekundärbatterie mit einem gestapelten Elektrodenkörper (200), der durch kreuzweises Schichten von positiven Elektroden (212), Separatoren (211) und negativen Elektroden (213) gebildet ist, **dadurch gekennzeichnet, dass**
Dichtflächen (211a, 211b) an beiden Nicht-Elektrodenseiten des gestapelten Elektrodenkörpers (200) vorgesehen sind, wobei die Dichtflächen (211a, 211b) dadurch gebildet sind, dass Verlängerungsabschnitte der Separatoren (211) von oben und unten in engem Kontakt miteinander stehen,
der Separator-Verlängerungsabschnitt einen Biegegrad aufweist, der, bezogen auf eine Höhe des gestapelten Elektrodenkörpers (200), von der Mitte zu dem oberen und dem unteren Ende hin zunimmt,
eine Fixierkraft zwischen den Verlängerungsabschnitten der Separatoren (211) durch thermische Druckbeaufschlagung an der Dichtfläche (211a, 211b) erzeugt ist, und
die durch thermische Druckbeaufschlagung gebildete Dichtfläche (211a, 211b) über den gesamten Verlängerungsabschnitt der übereinander gestapelten Separatoren (211) ausgebildet ist und ein Querschnitt auf der Nicht-Elektrodenseite des gestapelten Elektrodenkörpers (200) durch die Separatoren (211) am oberen und unteren Ende und die Dichtfläche (211a, 211b) trapezförmig ausgebildet ist.

## Revendications

1. Dispositif d'étanchéité latéral (100) pour un corps d'électrode empilé, **caractérisé en ce qu'**il comprend :
une embase (110) dans laquelle est calé un corps d'électrode empilé (200) avec des électrodes positives (212), des séparateurs (211), et des électrodes négatives (213) en lamellé-croisé ;
un dispositif de presse (150a, 150b) mettant sous pression en haut et en bas les deux côtés de côtés sans électrodes du corps d'électrode empilé (200) en formant des surfaces d'étanchéité (211a, 211b) composées des séparateurs (211) de façon à mettre en contact étroit les bouts des séparateurs (211) en haut et en bas ;
un élément de renforcement (160a, 160b) exerçant une force de séparation entre les séparateurs (211) constituant la surface d'étanchéité (211a, 211b) pour renforcer la surface d'étanchéité (211a, 211b) ; et
un dispositif d'inspection (120) générant des informations d'alignement du corps d'électrode empilé (200) posé sur l'embase (110).

2. Dispositif d'étanchéité latéral pour un corps d'électrode empilé selon la revendication 1,
le dispositif de presse (150a, 150b) étant agencé pour mettre sous pression les parties d'extension du séparateur s'étendant plus loin dans le sens de la largeur du corps d'électrode empilé (200) que les électrodes positives (212) ou les électrodes négatives (213).

3. Dispositif d'étanchéité latéral pour un corps d'électrode empilé selon la revendication 2,
le dispositif de presse (150a, 150b) comprenant une partie d'enroulement (150a, 150b) effectuant une pressurisation rotationnelle.

4. Dispositif d'étanchéité latéral pour un corps d'électrode empilé selon la revendication 3,
le dispositif de presse (150a, 150b) effectuant une pressurisation de sorte que les séparateurs (211) présentent un degré de flexion augmentant, en fonction du sens de la hauteur du corps d'électrode empilé (200), du centre vers des extrémités supérieures et inférieures.

5. Dispositif d'étanchéité latéral pour un corps d'électrode empilé selon la revendication 4,
l'élément de renforcement (160a, 160b) comprenant une partie de chauffage (160a, 160b) chauffant les extrémités des séparateurs (211) pour exercer sur ceux-ci une force de fixation.

6. Dispositif d'étanchéité latéral pour un corps d'électrode empilé selon la revendication 5,
la partie de chauffage (160a, 160b) mettant sous pression les extrémités des séparateurs (211) vers le centre du corps d'électrode empilé (200) en fonction du sens de la largeur du corps d'électrode empilé (200) pour former la surface d'étanchéité (211a, 211b) par le biais d'une fusion thermique des séparateurs (211).

7. Dispositif d'étanchéité latéral pour un corps d'électrode empilé selon la revendication 6,
la surface d'étanchéité (211a, 211b) par fusion thermique étant formée sur une partie d'extension entière des séparateurs stratifiés en haut et en bas (211), et une section transversale vers le côté sans électrode du corps d'électrode empilé (200) étant formé sous une forme trapézoïdale par les séparateurs (211) des extrémités supérieures et inférieures, et la surface d'étanchéité (211a, 211b).

8. Dispositif d'étanchéité latéral pour un corps d'électrode empilé selon la revendication 7,
la partie de chauffage (160a, 160b) comprenant :
une barre chauffante (161a, 161b) agencée parallèlement à un sens longitudinal du corps d'électrode empilé (200) ; et
un élément de déplacement en va-et-vient (163a, 163b) déplaçant la barre chauffante (161a, 161b) en va-et-vient dans le sens de la largeur du corps d'électrode empilé (200).

9. Dispositif d'étanchéité latéral pour un corps d'électrode empilé selon la revendication 1, comprenant en outre un module de commande (130) commandant le fonctionnement du dispositif de presse (150a, 150b) et de l'élément de renforcement (160a, 160b), et commandant la rectification des positions et des angles du dispositif de presse (150a, 150b) et de l'élément de renforcement (160a, 160b) en fonction des informations d'alignement générées par le dispositif d'inspection (120).

10. Dispositif d'étanchéité latéral pour un corps d'électrode empilé selon les revendications 1 à 9, comprenant en outre un châssis de corps principal (141a, 141b) agencé avec le dispositif de presse (150a, 150b) et l'élément de renforcement (160a, 160b), et comprenant un élément de corps principal (140a, 140b) ajustant les positions et les angles du dispositif de presse et de l'élément de renforcement (160a, 160b) par le mouvement et la rotation du châssis de corps principal (141a, 141b).

11. Dispositif d'étanchéité latéral pour un corps d'électrode empilé selon la revendication 10,
le dispositif de presse (150a, 150b) étant agencé pour se déployer en bas et en haut depuis des extrémités supérieure et inférieure du châssis de corps principal (141a, 141b), respectivement, et l'élément de renforcement (160a, 160b) étant agencé pour s'étendre latéralement du châssis de corps principal (141a, 141b) vers le corps d'électrode empilé (200).

12. Dispositif d'étanchéité latéral pour un corps d'électrode empilé selon la revendication 10, l'élément de corps principal (140a, 140b) comprenant :
un dispositif d'ajustage de la position (145a, 145b) connecté au châssis de corps principal (141a, 141b) pour déplacer de façon intégrale le châssis de corps principal (141a, 141b) en va-et-vient dans le sens de la largeur du corps d'électrode empilé (200), et/ou
un dispositif d'ajustage de l'angle (143a, 143b) connecté au châssis de corps principal (141a, 141b) pour effectuer une rotation intégrale du châssis de corps principal (141a, 141b) dans le sens horizontal.

13. Batterie secondaire comprenant un corps d'électrode empilé (200) formé par lamellé-croisé d'électrodes positives (212), de séparateurs (211), et d'électrodes négatives (213), **caractérisé en ce que**
des surfaces d'étanchéité (211a, 211b) formées en établissant un contact étroit de parties des séparateur (211) en haut et en bas étant agencées des deux côtés de côtés sans électrodes du corps d'électrode empilé (200),
la partie d'extension du séparateur présentant un degré de flexion augmentant, en fonction d'une hauteur du corps d'électrode empilé (200), du centre vers des extrémités supérieures et des extrémités inférieures,
une force de fixation étant exercée entre des parties d'extension des séparateurs (211) par pressurisation thermique sur les surfaces d'étanchéité (211a, 211b), et
la surface d'étanchéité (211a, 211b) étant formée, par pressurisation thermique, sur une partie d'extension entière de séparateurs (211) stratifiés en haut en en bas, et une section transversale vers le côté sans électrode du corps d'électrode empilé (200) étant formée sous une forme trapézoïdale par les séparateurs (211) d'extrémités supérieures et inférieures, et la surface d'étanchéité (211a, 211b).
